# EUROPÄISCHE PATENTANMELDUNG

(11) **EP 0 857 902 A2**
(43) Veröffentlichungstag der Anmeldung: **12.08.1998**
(21) Anmeldenummer: 98101244.6
(22) Anmeldetag: 24.01.1998
(51) Int. Cl.: F16K 15/02

(54) **Rückflussverhinderer**

(30) Priorität: 06.02.1997 DE 29702036 U
(71) Anmelder: Winkler, Norbert, D-63699 Kefenrod (DE)
(72) Erfinder: Winkler, Norbert, D-63699 Kefenrod (DE)
(74) Vertreter: Müller-Wolff, Thomas, Dipl.-Ing.

(57) **Zusammenfassung**

Die Erfindung betrifft einen Rückflußverhinderer mit Zu- und Ablaufanschluß zur Verbindung von Pumpen mit Leitungen und Schläuchen, üblicherweise bestehend aus einem Ventilgehäuse 1, in dem eine federbelastete Klappe angeordnet ist sowie aus je einem Reduzierstück 2, 3, mit dem der Rückflußverhinderer an Leitungen, Filtereinsätzen oder dergleichen anschließbar ist. Zur Vermeidung eines Druckabfalls im Ansaugsystem wird vorgeschlagen, daß das Reduzierstück 2, 3 und das Ventilgehäuse 1 einstückig ausgebildet sind, wobei die gemeinsame Mittelachse in Durchflußrichtung liegt und ein einheitliches Material für Reduzierstück 2, 3 und Ventilgehäuse 1 verwendet wird.

## Beschreibung

Die Erfindung betrifft einen Rückflußverhinderer mit Zu- und Ablaufanschluß zur Verbindung von Pumpen mit Leitungen und Schläuchen, insbesondere zur Verbindung mit einer Pumpen-Saugleitung, bestehend aus einem Ventilgehäuse, in dem eine federbelastete Klappe angeordnet ist sowie aus je einem Reduzierstück, mit dem der Rückflußverhinderer an Leitungen, Filtereinsätzen oder dergleichen anschließbar ist.

Derartige Rückflußverhinderer sind bereits bei verschiedenen Pumpensystemen verwendet worden. Ihre Aufgabe ist es, im Falle eines angeschlossenen Saugschlauchs eine Wassersäule bis zur Pumpe dauerhaft aufrechtzuhalten, damit nicht nach jedem Pumpenstart eine neue Wassersäule aufgebaut werden muß.

In der Praxis hat sich jedoch gezeigt, daß insbesondere nach längerer Standzeit die Wassersäule abgefallen war und daher vermutlich Undichtigkeiten im Ansaugbereich vorlagen.

Durch diese Undichtigkeiten und den damit verbundenen Druckabfall treten Zeitverzögerungen beim Start der Pumpenanlage auf. Bei häufigen Starts aus dem entleerten bzw. teilentleerten Zustand ist mit einem erhöhten Pumpenverschleiß zu rechnen, bedingt durch das Trockenlaufen und den ungleichmäßigen Belastungszustand der Pumpe.

Aufgabe der vorliegenden Erfindung ist es daher, die beschriebenen Nachteile zu vermeiden und einen Rückflußverhinderer derart zu konstruieren, daß ein Druckabfall im Ansaugsystem einer Pumpe mit Sicherheit vermieden wird.

Diese Aufgabe wird durch die im Hauptanspruch angegebenen Merkmale gelöst. Weitere Ausgestaltungen der Erfindung sind den Unteransprüchen zu entnehmen.

Die erfindungsgemäße Ausbildung des neuen Rückflußverhinderers besteht im wesentlichen darin, daß das Reduzierstück und das Ventilgehäuse einstückig ausgebildet sind, wobei eine gemeinsame Mittelachse in Durchflußrichtung liegt und ein einheitliches Material für Reduzierstück und Ventilgehäuse verwendet wird. Durch die einstückige Ausbildung werden Dichtungsprobleme vermieden und zusätzlich wird für einen wirbelfreien Strömungsverlauf gesorgt, da mit den auf einer gemeinsamen Mittelachse liegenden Bauteilen des Rückflußverhinderers ein glatter Durchtrittskanal geschaffen wurde.

Weitere Einzelheiten sind den nachfolgenden Figurenbeschreibungen zu entnehmen. Es zeigen:
- Figur 1: perspektivische Ansicht eines erfindungsgemäßen Rückflußverhinderers (Standardausführung)
- Figur 2: perspektivische Ansicht eines erfindungsgemäßen Rückflußverhinderers in Kombination mit einer Filtereinheit.

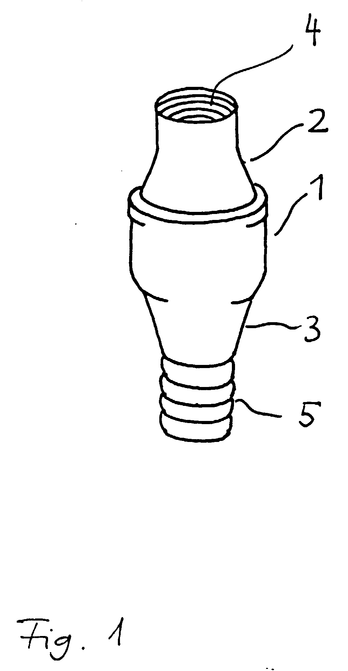

Wie aus Figur 1 zu entnehmen ist, wird das Ventilgehäuse 1 beidseitig von einem Reduzierstück 2, 3 umschlossen. Am Reduzierstück 2 befindet sich ein Innengewinde 4 und am Reduzierstück 3 eine Schlauchtülle 5. Diese können sowohl metrische als auch vorzugsweise Zollgewinde-Maße aufweisen. Üblich sind hier 1 Zoll Gewinde.

Wie bei der glatten Gehäuseform des erfindungsgemäßen Rückflußverhinderers zu erwarten war, wurde ein geringerer Durchlaßwiderstand beim Betrieb im Saug- und Druckbereich festgestellt.

Dieses wiederum ist die Folge einer geringen Verwirbelung und damit von verringerten Leistungsverlusten. Bei der Optimierung konnten die Durchlaßwiderstände so bemessen werden, daß der Strömungsquerschnitt im Ventilgehäusebereich dem wirksamen Querschnitt im Reduzierstück entspricht.

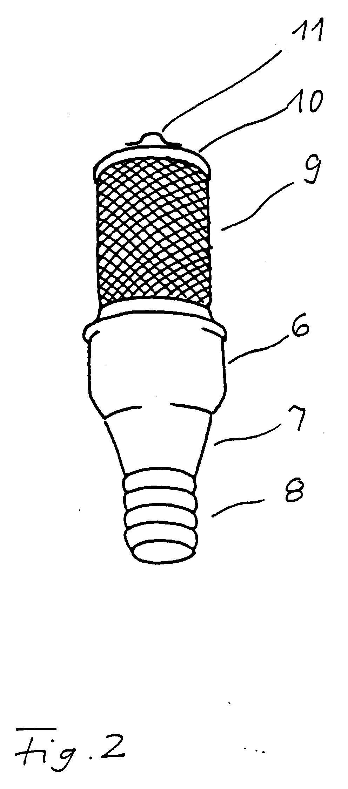

In Figur 2 ist der erfindungsgemäße Rückflußverhinderer in Verbindung mit einem Filtergewebe dargestellt. Der Rückflußverhinderer besteht aus einem Ventilgehäuse 6, einem Reduzierstück 7, einer Schlauchtülle 8 und einer Filtereinheit, die aus Filtergewebe 9 und Filterdeckel 10 mit Öse 11 gebildet wird.

Die Besonderheit dieser Kombination besteht darin, daß ein großer Filteransaugkorb verwendet werden kann, der zu einem beruhigten Ansaugen mit geringem Ansaugverlusten führt. Diese neuen Eigenschaften haben insbesondere für Regenwassersammelsysteme einen erheblichen Vorteil, da hiermit eine Verwirbelung der Sedimente vermieden werden kann und die Pumpenauslegung im Hinblick auf verringerte Leistungsanforderungen erfolgen kann.

Die Öse 11 ist für die Befestigung einer Schwimmkugel geeignet, kann aber auch zum Befestigen eines Betelon-Seiles für Reinigungszwecke verwendet werden.

Die Vorteile des erfindungsgemäßen Rückflußverhinderers sind daher in Verbindung mit der Filtereinheit darin zu sehen, daß erstmalig ein sicheres, relativ wartungsarmes und sehr effizient arbeitendes Ansaugsystem geschaffen wurde, mit dem eine große Ansaugoberfläche ohne die bisherigen Abdichtungsprobleme für die Wasserentnahme aus Zisternen, Regenwassersammelbehältern oder Teichen und Seen eingesetzt werden kann.

## Patentansprüche

1. Rückflußverhinderer mit Zu- und Ablaufanschluß zur Verbindung von Pumpen mit Leitungen und Schläuchen, insbesondere zur Verbindung mit einer Pumpen-Saugleitung, bestehend aus einem Ventilgehäuse (1), in dem eine federbelastete Klappe angeordnet ist sowie aus je einem Reduzierstück (2, 3), mit dem der Rückflußverhinderer an Leitungen, Filtereinsätzen oder dergleichen anschließbar ist,
dadurch gekennzeichnet,
daß das Reduzierstück (2, 3) und das Ventilgehäuse (1) einstückig ausgebildet sind, wobei eine gemeinsame Mittelachse in Durchflußrichtung liegt und ein einheitliches Material für Reduzierstück (2, 3) und Ventilgehäuse (1) verwendet wird.

2. Rückflußverhinderer nach Anspruch 1,
dadurch gekennzeichnet,
daß als Material ein Edelstahlblech verwendet wird, das durch spanloses Umformen wie Tiefziehen, Drücken und Bördeln in eine Form für das Reduzierstück (2, 3) und das Ventilgehäuse (1) gebracht wird.

3. Rückflußverhinderer nach einem der vorhergehenden Ansprüche,
dadurch gekennzeichnet,
daß an dem einen Reduzierstück (7) eine Schlauchtülle (8) und an der anderen Seite des Ventilgehäuses (6) eine Filtereinheit, bestehend aus Filtergewebe (9) und Filterdeckel (10) angeordnet ist.

4. Rückflußverhinderer nach einem der vorhergehenden Ansprüche,
dadurch gekennzeichnet,
daß das Filtergewebe (9) fest mit dem Ventilgehäuse (6) verbunden ist und der Filterdeckel (10) eine Öse (11) zur Befestigung einer Schwimmkugel aufweist.
